Europäisches Patentamt

European Patent Office

Office européen des brevets

(19)

(11) Numéro de publication: **0 242 276 B1**

(12) ## FASCICULE DE BREVET EUROPEEN

(45) Date de publication de fascicule du brevet: **21.10.92** (51) Int. Cl.⁵: **B65G 21/02**

(21) Numéro de dépôt: **87400787.5**

(22) Date de dépôt: **08.04.87**

(54) **Longeron modulaire auto-porteur.**

(30) Priorité: **08.04.86 FR 8604974**
**03.04.87 FR 8704696**

(43) Date de publication de la demande:
**21.10.87 Bulletin 87/43**

(45) Mention de la délivrance du brevet:
**21.10.92 Bulletin 92/43**

(84) Etats contractants désignés:
**AT BE CH DE ES GB GR IT LI LU NL SE**

(56) Documents cités:
**EP-A- 0 120 996     DE-A- 3 136 597**
**DE-C- 883 130       FR-A- 2 517 647**
**FR-A- 2 544 292     US-A- 3 605 994**
**US-A- 3 800 938**

(73) Titulaire: **MACHINES SPECIALES ET MANU-
TENTION S.A.**
**424 La Cloiserie Boîte 235**
**F-Noisy Le Grand (Seine Saint Denis)(FR)**

(72) Inventeur: **Hilaire, Gérard Michel**
**5, rue Berthelot**
**Lagny sur Marne Seine et Marne(FR)**

(74) Mandataire: **Herrburger, Pierre**
**Cabinet Pierre Herrburger 115, boulevard
Haussmann**
**F-75008 Paris(FR)**

Rank Xerox (UK) Business Services

## Description

L'invention concerne, de manière générale, les dispositifs de convoyage, qu'il s'agisse d'un convoyeur à accumulation ou d'un convoyeur de transport positif (au pas) ou encore d'un convoyeur de transport auxiliaire.

De tels dispositifs de convoyage sont déjà connus et la présente invention concerne notamment un dispositif de convoyage à bande ou chaîne sans fin avec un brin d'aller recevant les produits à transporter et un brin de retour, ce dispositif étant formé d'éléments porteurs profilés parallèles et successifs de section identique, munis de rainures de fixation, chaque élément porteur étant formé de deux longerons profilés modulaires extrudés en métal léger, chaque longeron (1) ayant une forme générale de C ouvert de section trapézoïdale, les deux longerons étant agencés face à face de manière à former un logement principal, le brin de retour du dispositif de convoyage étant entièrement reçu dans le logement principal, quatre rainures de fixation étant réparties à la périphérie de chaque élément porteur pour constituer des logements secondaires en forme de T, lesdites rainures étant formées par des éléments profilés qui entourent la section de l'élément porteur sans empiéter sur cette section, les ouvertures desdits logements secondaires étant situées dans les faces latérales externes (8) des rainures de fixation dans un plan perpendiculaire au plan de support horizontal, les faces latérales étant alignées deux par deux.

Un tel dispositif est connu selon le document US-A-3 800 938.

En d'autres termes, ce convoyeur connu se présente sous la forme d'une structure composée de poutres constituées chacune de deux éléments latéraux réunis par des entretoises portant des galets pour le brin de retour du convoyeur. Dans sa partie supérieure, chaque élément se termine par un plateau et la combinaison des deux plateaux forme le support pour le bras d'amenée du convoyeur.

En d'autres termes, ce convoyeur présente un assemblage de poutres de forme compliquée et dont le montage n'est pas simple puisque chaque poutre est formée de deux profilés. Entre autres inconvénients supplémentaires, la poutre n'est pas accessible de l'extérieur, ce qui est gênant pour la mise en place de la chaîne transporteuse ou pour des interventions à l'intérieur de la poutre, sur la chaîne en cas d'incident.

Il convient également de remarquer que la structure auto-portante de cette poutre ne résulte pas seulement des deux longerons, mais de l'assemblage des deux longerons et des moyens servant à cet assemblage, comme par exemple les axes portant les galets. En effet, ces axes relient les deux longerons et maintiennent leur écartement ou leur fixation sur un support.

En résumé, cet art antérieur présente de nombreux inconvénients liés à la complexité de la structure et au coût de réalisation et de montage que cela entraîne.

La présente invention a pour but de remédier aux inconvénients de la solution connue et concerne à cet effet un dispositif de convoyage caractérisé par les caractéristiques de la première revendication.

Selon une autre caractéristique de l'invention, le logement principal du longeron comporte une trappe de visite amovible et les rainures de fixation sont fermées par des joncs de visite clipsables.

Cette solution, à savoir la structure particulière du logement, permet de satisfaire aux multiples conditions recherchées.

En effet, le longeron a une forme générale de C ouvert qui constitue à la fois la structure autoportante et le logement pour recevoir des organes tels que, par exemple, le brin de retour de la chaîne.

Cette section en forme de C ouvert est bordée de rainures de fixation à la manière de pôles ou de satellites entourant cette section en forme de C ouvert sans empiéter sur cette section. Comme par ailleurs, les faces latérales des rainures de fixation du longeron sont situées dans un plan perpendiculaire au plan d'appui ou plan inférieur du longeron, ce longeron présente un contour extérieur carré ou rectangulaire.

L'alignement des surfaces latérales du longeron ou du moins des surfaces latérales appartenant aux rainures auxiliaires, est important pour la fixation de dispositifs de liaison ou de support pour des accessoires de manière à permettre un meilleur accrochage.

La possibilité de fixer les acessoires ou des organes de liaison entre une rainure supérieure et une rainure inférieure, assure une excellente répartition des efforts sur l'ensemble du longeron.

Les rainures extérieures permettent la mise en place d'accessoires tels que des détecteurs de passage, des dispositifs de comptage, etc ... ou encore la mise en place d'une superstructure de liaison ou d'appui.

Il est également important que le longeron soit accessible de l'extérieur et non de l'intérieur pour toutes les opérations de contrôle et d'entretien de l'installation.

Suivant une caractéristique intéressante, le longeron se prolonge dans sa partie supérieure par un profil porteur susceptible de recevoir des accessoires ou par exemple des éléments tels que le guide latéral du convoyeur.

Suivant une autre caractéristique intéressante, les longerons sont associés par paires et sont reliés par des entretoises portées par des éclisses montées sur les faces latérales des longerons dans les rainures auxiliaires.

Le dispositif de convoyage est en général formé de deux longerons parallèles et d'une succession de longerons parallèles qui peuvent être combinés ou assemblés par vissage et boulonnage. Les caractéristiques des longerons selon l'invention permettent une utilisation très universelle de tels longerons pour la réalisation de dispositifs de convoyage aussi différents qu'un convoyeur à accumulation, un convoyeur de transport au pas ou d'un convoyeur de transfert auxiliaire.

Selon un mode particulier de réalisation de l'invention, les rainures non utilisées et le logement principal peuvent obstrués pour former un ensemble esthétique propre, protégé de la poussière.

Selon un autre mode particulier de réalisation de l'invention, il est prévu des moyens de protection pour protéger en tous points l'environnement des opérateurs par rapport à la chaîne.

L'encombrement du profilé est réduit au minimum puisque les chaînes ou les courroies de travail circulent sur le dessus du profilé et le brin de la chaîne ou de la courroie de retour circule à l'intérieur du profilé.

De manière générale, les longerons selon l'invention sont particulièrement intéressants à cause de leur réversibilité et de leur polyvalence découlant de la forme de leur section.

Les longerons s'utilisent à gauche et à droite, sans modification pour la réalisation de la poutre gauche et de la poutre droite du convoyeur.

Les longerons se mettent bout à bout sans aucune difficulté et sans poser de problème particulier.

La fabrication des convoyeurs est particulièrement simple à cause de l'utilisation d'un sel profil.

Cela constitue un avantage très important sur le plan de la fabrication des profilés, car il suffit d'une seule filière.

Les problèmes de stockage et de gestion des stocks sont également réduits puisqu'il n'y a qu'une seule forme de longeron et que les longerons se débitent à la longueur requise.

Enfin, pour l'entretien, s'il faut remplacer un longeron détérioré, cela ne pose aucun problème puisque le client ne stocke qu'un seul type de profilé pour toutes ses installations.

La présente invention se propose également de développer le dispositif de convoyage décrit ci-dessus et notamment par un moyen permettant d'assurer l'entraînement et la tension de la chaîne ou de la courroie du convoyeur de manière particulièrement pratique et efficace sans diminuer le caractère modulaire du convoyeur, ni le fait que les longerons constituant les poutres du convoyeur soient auto-porteurs.

A cet effet, un mode particulier de réalisation de l'invention concerne également un dispositif de convoyage du type ci-dessus, caractérisé en ce qu'il comporte à au moins une extrémité du ou des longerons constituant l'ossature du convoyeur, un élément d'extrémité en forme de boîtier réalisé en une seule pièce en métal léger injecté :

- destiné à être fixé à l'extrémité correspondante d'un longeron,
- les parois latérales du boîtier comportent une double coulisse longitudinale, homologue, recevant, de manière coulissante, l'axe du pignon ou de la poulie de renvoi de la chaîne ou de la courroie du convoyeur,
- deux ressorts à air dont une extrémité est reliée à la paroi correspondante du boîtier et l'autre à l'axe du pignon ou de la poulie de renvoi de manière à exercer sur ce pignon ou sur cette poulie une poussée constante dans le sens de la tension de la chaîne ou de la courroie.

Suivant un autre mode de réalisation de l'invention, le dispositif comporte un élément d'extrémité en forme de boîtier réalisé en une seule pièce en métal léger injecté :

- destiné à être fixé à l'extrémité correspondante d'un longeron,
- comportant dans ses parois latérales un passage pour l'axe-moteur de la chaîne,
- des moyens de fixation latérale du boîtier à l'extrémité du longeron,
- des moyens de fixation de support du tube de protection de l'axe reliant les deux longerons homologues et du boîtier du moto-réducteur d'entraînement de l'axe.

Suivant un autre mode particulier de réalisation de l'invention, les moyens de fixation du boîtier d'extrémité sur le longeron, sont constitués par des cornières dont l'une des ailes est fixée sur deux rainures auxiliaires du longeron principal, sur la face externe du longeron et sur la face interne de celui-ci et l'autre aile de chacune des deux cornières est reliée à des pattes de la face avant du boîtier.

Suivant un autre mode particulier de réalisation de l'invention, le dispositif comporte un support d'accessoires formé d'une patte destinée à être fixée à l'une des rainures auxiliaires des longerons portant une lyre à deux branches recevant un accessoire, l'ensemble étant serré par une vis.

Suivant un autre mode particulier de réalisation de l'invention, le dispositif comporte un longeron complémentaire formant un support à rouleaux ayant une surface d'appui destinée à s'appuyer sur la surface supérieure du longeron principal et descendant en-dessous de la surface supérieure du longeron principal jusqu'au niveau de l'une des rainures auxiliaires supérieures et portant des moyens de fixation de ce longeron auxiliaire dans la rainure auxiliaire correspondante, ce longeron formant, dans sa partie supérieure, un retour pour recevoir un guide latéral et dans sa partie intermédiaire, des perçages pour recevoir l'extrémité des axes des rouleaux pour former un convoyeur à rouleaux.

Suivant un autre mode particulier de réalisation de l'invention, le longeron auxiliaire comporte une rainure auxiliaire.

Suivant un autre mode de réalisation de l'invention, le guide latéral comporte un cache ou peigne avec des découpes pour venir sur et dans l'intervalle des rouleaux.

La présente invention sera mieux comprise à l'aide des dessins ci-joints qui doivent être considérés à titre d'exemple non limitatif de l'invention et dans lesquels :

- la figure 1 est une vue en perspective de face du longeron équipé de chaînes de convoyage,
- la figure 2 est une vue de face de deux longerons montés et assemblés sur un support en forme de T et constituant un transporteur bi-chaîne,
- la figure 3 est une vue de face d'un second mode de réalisation de transporteur bi-chaîne comportant quatre longerons combinés et fixés par paire sur les traverses du transporteur,
- la figure 4 est une vue de face d'un troisième mode de réalisation de transporteur bi-chaîne. Ce dernier est suspendu au plafond ce qui permet de transporter les charges sur des balancelles,
- la figure 5 est une vue de côté d'un boîtier d'extrémité recevant un pignon (ou une poulie) tendeur de renvoi de chaîne ou de courroie muni de la cornière de fixation mais sans l'extrémité du longeron auquel est fixé le boîtier,
- la figure 6 est une vue de droite du boîtier de la figure 5,
- la figure 7 est une vue de côté du boîtier de la figure 5 sans ses accessoires et les éléments qu'ils portent,
- la figure 8 est une vue de droite partiellement coupée du boîtier recevant l'axe d'entraînement,
- la figure 9 est une vue de côté du boîtier de la figure 8,
- la figure 10 est une vue en coupe d'une variante de longeron principal et de longerons auxiliaires montés sur le longeron principal,
- la figure 11 est une vue de côté d'un support d'accessoire,
- la figure 12 est une vue de-dessus du support de la figure 11,
- la figure 13 montre en coupe une variante de l'invention appliquée à l'entraînement de charges par adhérence sur des courroies.

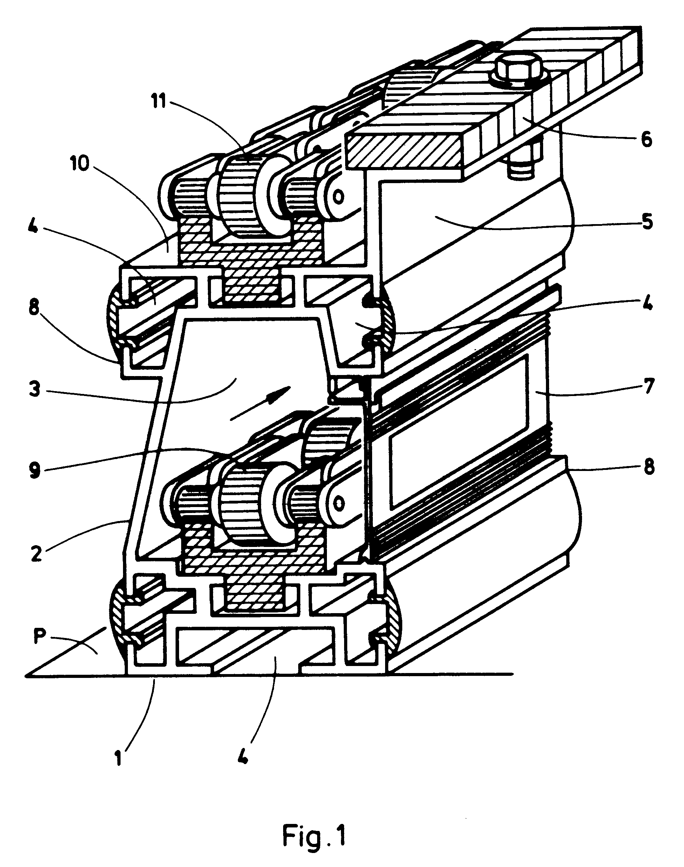

Selon la figure 1, le longeron 1 est un longeron modulaire auto-porteur destiné à servir d'élément de support notamment pour des dispositifs de convoyage, de transport ou de transfert. Un tel longeron est également applicable à des bi-chaînes, des transporteurs à bande, des chaînes transfert (dans ce dernier cas, le longeron est utilisé comme élément unique), à des élévateurs, des tables tournantes, pivotantes etc .. . Le longeron 1 est constitué d'un profilé en aluminium extrudé arrivant fini de la filière. Le longeron modulaire 1 présente une forme générale de C ouvert.

Il se compose d'une paroi interne 2 formant un logement principal 3. Des rainures de fixation 4 sont réparties à la périphérie de la paroi interne 2. Les rainures 4 forment des logements secondaires. Ces logements secondaires permettent la mise en place de divers accessoires concernant la motorisation, les butées d'arrêt latérales et centrales, les organes de détection ou autres.

Le longeron 1 comporte en outre un profil porteur de protection 5 dans sa partie supérieure. Plus particulièrement, le profil porteur de protection 5 est disposé au niveau de la face latérale extérieure du longeron 1. Ces profil porteur de protection 5 sert également de support à des organes de guidage tels que le guide latéral 6 fixé sur le profil 5 par vissage et boulonnage.

Le profil porteur de protection 5 constitue une protection intégrée au longeron 1.

Les rainures de fixation 4 périphériques forment les logements secondaires et présentent une forme générale de T.

Le logement principal 3 et les logements secondaires formés par les rainures 4 sont susceptibles d'être obturés par des trappes de visite amovibles telles que la trappe 7 obturant l'ouverture du grand C déterminée par la paroi interne 2, et par un profil en P.V.C. ou analogue obturant les rainures 4 non utilisées.

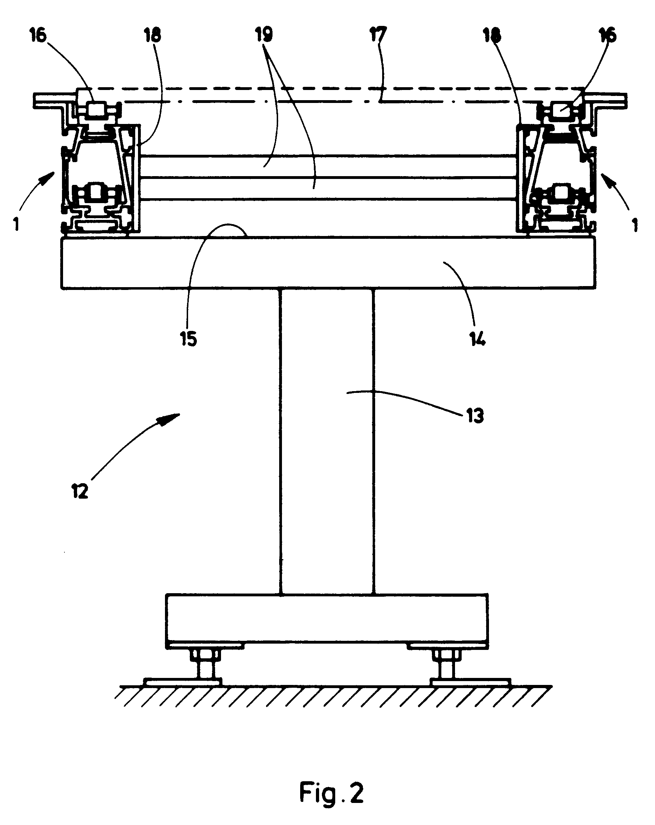

Plusieurs longerons 1 peuvent être combinés ou assemblés par vissage et boulonnage tel que cela sera décrit plus en détail ci-après aux figures 2, 3 et 4.

Le longeron 1 présente une longueur de l'ordre de 6 mètres.

Les faces externes latérales 8 du longeron 1 sont disposées dans un plan vertical perpendiculaire au plan support horizontal P.

Enfin, la paroi interne 2 formant le logement principal est de forme sensiblement trapézoïdale.

Dans ce mode de réalisation particulier, la face supérieure du longeron supporte la chaîne d'accumulation 11 du transporteur tandis que le logement principal 3 reçoit le retour de chaîne 9.

Selon la figure 2, le transporteur bi-chaîne 12 est pourvu d'une colonne de support 13 et d'une traverse 14 en forme de T. La face supérieure 15 de la traverse 14 reçoit les longerons 1 en aluminium extrudé tels que celui décrit à la figure 1 précédente. Les longerons 1 sont montés dans un plan horizontal et abritent chacun une chaîne d'entraînement 16, ces chaînes entraînant la charge transportée 17. Suivant ce mode de réalisation du transporteur bi-chaîne 12, les longerons sont placés dans un même plan horizontal et en vis-à-vis. Les longerons sont raccordés entre eux grâce à une plaque de fixation 18 vissée et boulonnée sur la face latérale de chacun des longerons, en regard l'un de l'autre. Les plaques de fixation permettent la mise en place et la fixation des traverses 19. Suivant cet exemple, le transporteur bi-chaîne est donc constitué notamment de deux longerons disposés en regard l'un de l'autre dans un même plan horizontal.

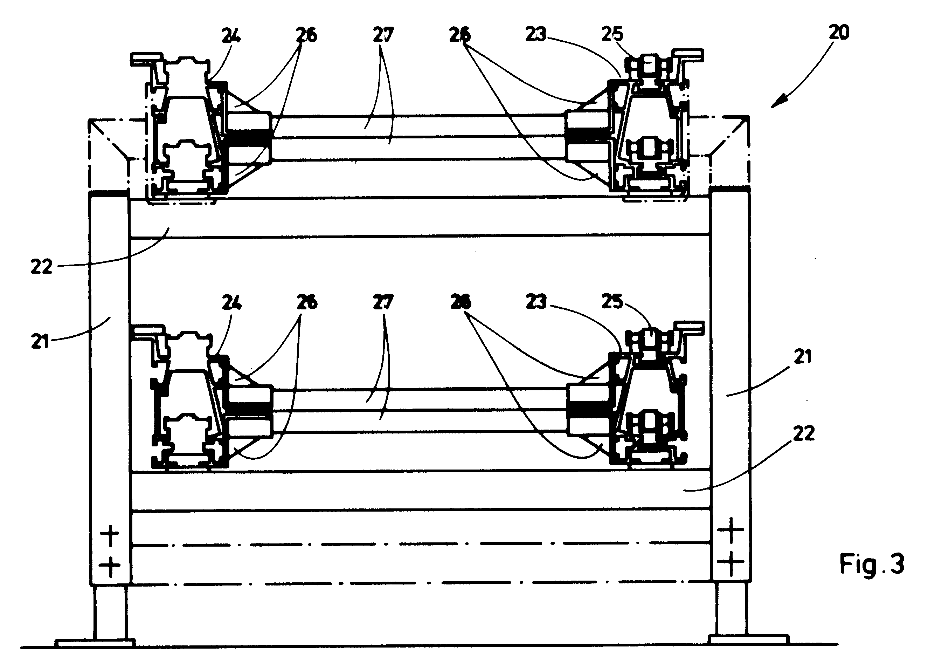

Selon la figure 3, la superposition de deux transporteurs bi-chaîne 20 est composée notamment d'un portique formé de montants télescopiques 21 et de traverses 22. Chacune des traverses 22 supporte une paire de longerons 23 et 24. Les longerons 23 et 24, superposés sur les traverses 22, sont pourvus de chaînes d'entraînement 25. Chacune des paires de longerons 23, 24, montée sur les traverses 22 est fixée l'une à l'autre par des éléments d'assemblage provenant directement de fonderies, sans nécessiter aucun usinage. Ces éléments d'assemblage sont constitués par des éclisses 26. Les éclisses sont montées sur les faces latérales des longerons 23, 24 et permettent la fixation d'entretoises 27.

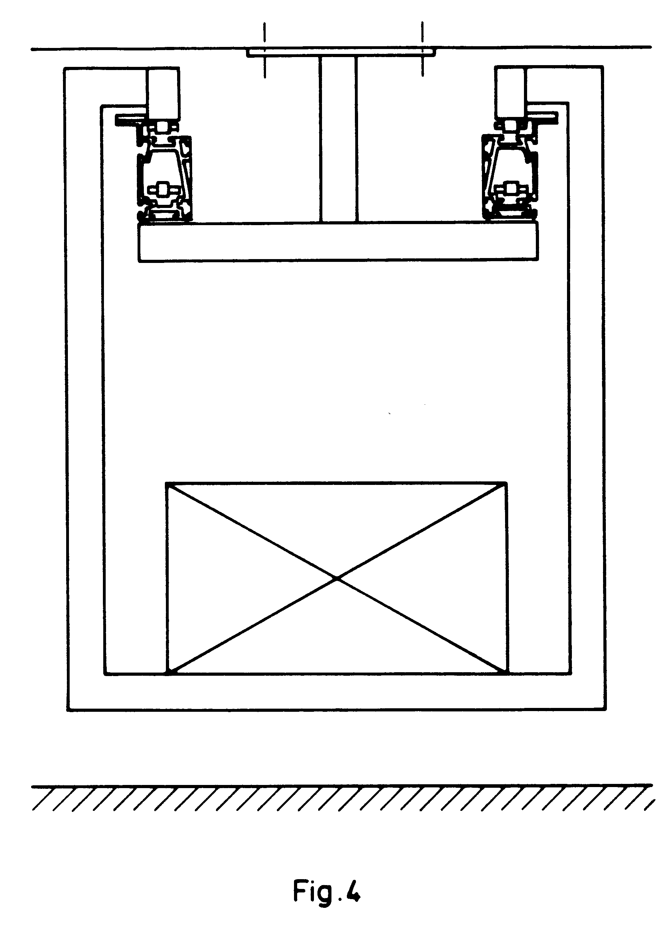

Selon la figure 4, le transporteur bi-chaîne de la figure 1 au lieu d'être repris au sol par des pieds, est repris en plafond ce qui permet le dégagement de la surface au sol.

Selon les figures 1 à 4, les rainures périphériques permettent la fixation d'un grand nombre d'accessoires tels que des entretoises, des pieds, des éléments de motorisation, des systèmes de tension, des butées centrales, des éléments de détection etc ...

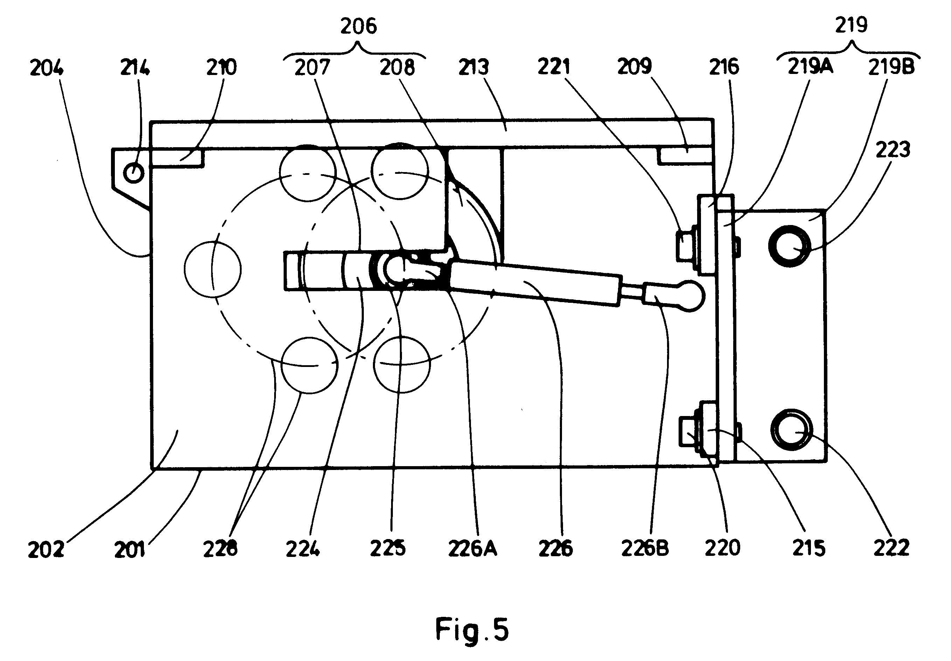

Les figures 5 à 7 montrent un boîtier d'extrémité destiné à être fixé à l'extrémité libre d'un longeron constituant l'ossature du convoyeur pour recevoir de manière coulissante l'axe du pignon ou de la poulie de renvoi de la chaîne ou de la courroie du convoyeur.

De manière plus détaillée, selon les figures 5 à 7, le boîtier, réalisé de préférence en une seule pièce en métal léger injecté, comporte des parois latérales 202, 203, une paroi frontale fermée 204 et une paroi frontale ouverte 205.

Les parois latérales 202, 203 sont symétriques alors que les parois frontales 204 et 205 sont différentes.

Les parois latérales 202 et 203 comportent une coulisse 206 à deux branches 207, 208, l'une 207 horizontale et l'autre 208 verticale. En partie haute, les parois latérales 202, 203, sont munies de pattes 209, 210, 211, 212 pour la fixation par exemple d'un organe de guidage ou de protection tel que la barrette de guidage 213 représentée à la figure 5.

Les barrettes de guidage 213 ferment également l'extrémité supérieure de la branche 208 de la coulisse 206.

La paroi frontale 204 porte une ou deux pattes 214 d'accrochage ou de fixation et la paroi frontale 205 comporte des pattes de montage 215, 216, 217, 218 disposées dans le prolongement de la paroi latérale mais en saillie vers l'extérieur par rapport aux parois 202, 203. Ces pattes 215, 216, 217, 218 sont munies d'orifices pour le passage de vis.

Les pattes supérieures 216, 218 ont un retour 216A, 218A servant de butée ou d'appui pour la cornière de montage telle que la cornière 219 représentée à la figure 5. L'une des ailes 219A de cette cornière est fixée aux pattes 215, 216 par des vis 220, 221. L'autre aile 219B de la cornière 219 est fixée par des vis 222, 223 aux rainures supérieure et inférieure extérieures de l'extrémité correspondante du longeron non représenté.

Le palier 224 de l'extrémité de l'axe 225 de renvoi de la chaîne 227 ou de la courroie 229, représenté schématiquement en traits interrompus, s'introduit par la branche verticale 208 et peut coulisser horizontalement dans la branche 207 pour tendre la chaîne ou la courroie. L'extrémité de l'axe 225 est reliée à l'extrémité 226A d'un ressort à air 226 dont l'autre extrémité 226B est reliée de manière articulée à la paroi latérale du boîtier 201.

Un tel ressort à air est prévu de chaque côté pour chaque extrémité de l'axe de manière à exercer une poussée constante dans le sens de la tension de la chaîne.

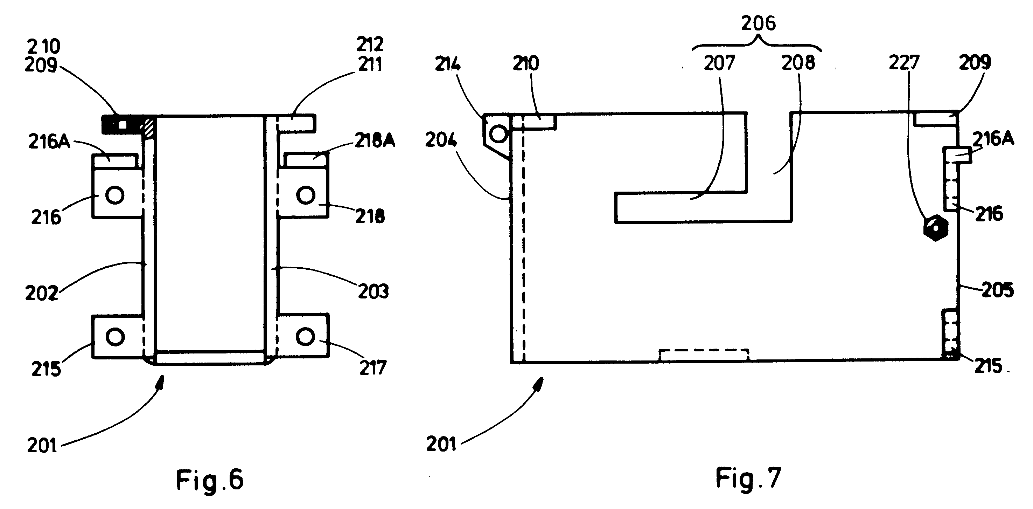

La figure 7 montre le point d'accrochage 227 pour l'extrémité 226B du ressort 226.

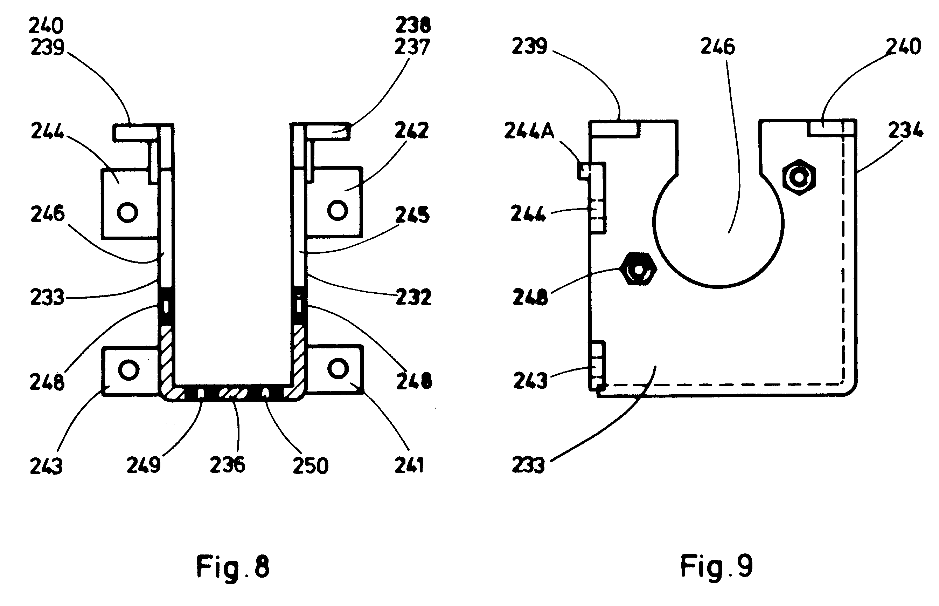

Les figures 8 et 9 montrent un élément d'extrémité en forme de boîtier réalisé en une seule pièce en métal léger injecté et qui est destiné à recevoir les moyens d'entraînement de la chaîne, c'est-à-dire un groupe motoréducteur entraînant le pignon (ou la poulie) moteur de la chaîne ou de la courroie.

Ce boîtier 232 se compose de parois latérales 232, 233 et d'une paroi frontale 234, l'autre côté du boîtier étant ouvert ainsi que d'un fond 236, la partie supérieure est ouverte.

Les parois latérales 232, 233 se terminent en partie haute par des pattes 237, 238, 239, 240 à chaque coin supérieur du boîtier. La face ouverte est également munie de pattes 241, 242, 243, 244 destinées à la fixation de ce boîtier sur une cornière latérale, elle-même fixée aux rainures secondaires du longeron auquel est fixé ce boîtier, comme cela a d'ailleurs été décrit à propos du boîtier 201.

Chacune des parois latérales 232, 233 comporte une découpe 245, 246, débouchant au niveau du bord supérieur. Cette découpe 245, 246 de forme circulaire permet la mise en place de l'axe d'entraînement de la chaîne. Le motoréducteur représenté se fixe sur la paroi extérieure du boîtier par l'intermédiaire de deux vis 247, 248 sur l'un des boîtiers et le palier de l'autre extrémité de l'axe se fixe de la même manière, par sa bride sur le boîtier prévu à l'extrémité de l'autre longeron.

Comme précédemment, les pattes 242, 244 se prolongent en partie haute par une extrémité recourbée formant une butée ou un appui 242A, 244A.

Enfin, le fond 236 est muni de perçages 249, 250 pour la fixation d'éventuels accessoires.

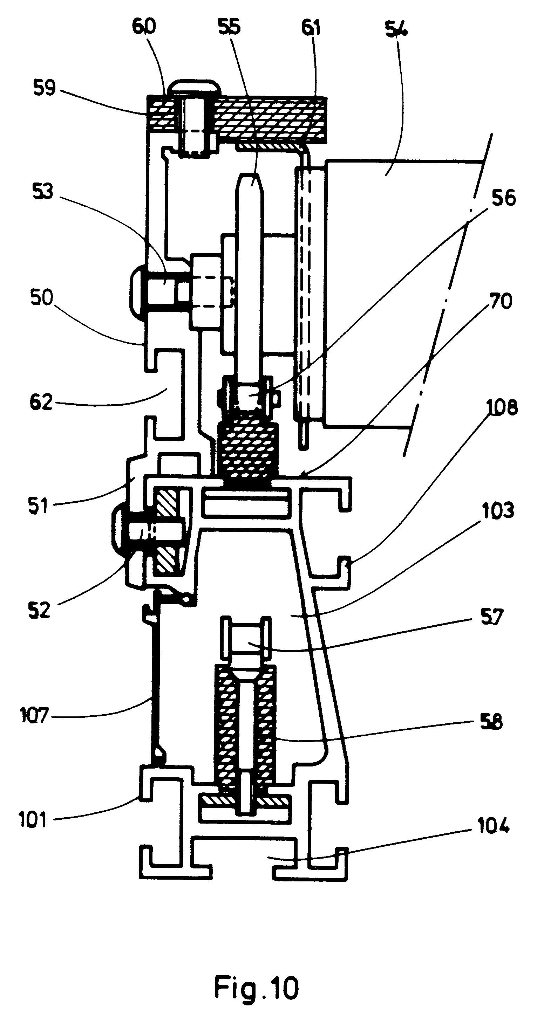

La figure 10 est une coupe schématique d'une variante de longeron, muni d'un longeron complémentaire formant un support de rouleaux. Le longeron principal 101 présente un corps en forme de C à section trapézoïdale munie à sa périphérie de six rainures 104 en position satellite constituant des rainures secondaires. Toutefois, ce profil 101 présente une surface supérieure 70 sans prolongement vers le haut formé par le profil de protection.

Toutes les autres parties sont identiques à celles de la section du longeron décrit ci-dessus et portent les mêmes références dans la série des centaines.

Le longeron complémentaire 50 destiné à être associé, le cas échéant à cette variante de longeron principal 101 se compose d'un corps avec un prolongement 51 à sa partie inférieure de façon à définir une forme d'équerre prenant appui sur la surface supérieure du longeron principal au-dessus d'une rainure 104 pour être fixé à celle-ci par une liaison par des boulons 52.

Ce longeron constitue un support de rouleaux 54. Dans la partie principale, sensiblement à mi-hauteur, ce longeron 50 comporte des perçages 53 pour le passage du moyen de fixation de l'axe des rouleaux 54, par exemple munis de pignons 55 en vue de leur entraînement par la chaîne 56 dont le brin de retour 57 est guidé sur le bloc 58 placé dans le logement en forme de C ouvert du logement principal 101.

En partie haute, le longeron de support 50 comporte un retour 59 qui porte un guide latéral 60 servant également de support à un carter ou peigne 61 de protection destiné à occuper l'intervalle entre les rouleaux 54.

Sur son côté extérieur, le longeron 50 est muni d'une rainure de fixation 62.

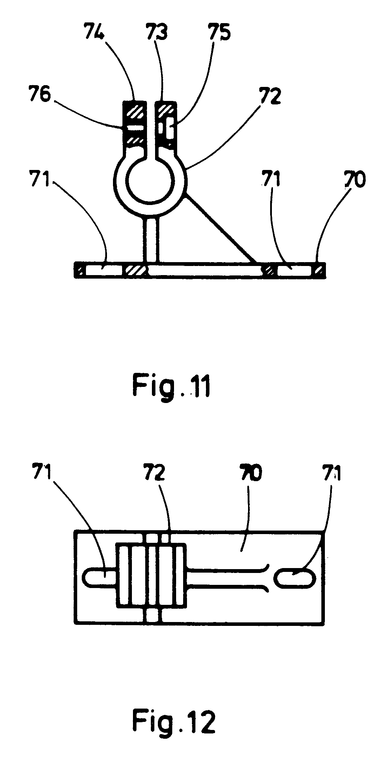

Les figures 11 et 12 montrent un support d'accessoires formé d'une semelle 70 munie de perçages 71 pour la fixation dans une rainure en forme de T et portant une lyre 72 à deux branches 73, 74 munies de perçages 75, 76 pour le serrage par une vis non représentée. Ce support qui peut être utilisé seul ou en combinaison avec un autre support placé dans une position homologue, sert à recevoir des accessoires ayant une partie ou un corps cylindrique circulaire se logeant dans la lyre 72 tel que, par exemple, un compteur, un détecteur de présence, etc ...

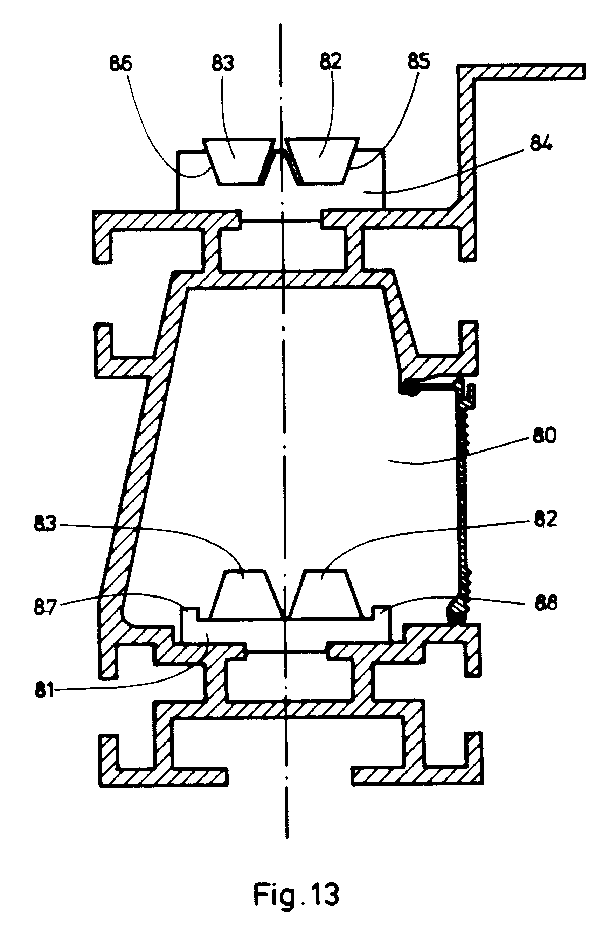

La figure 13 montre en coupe une variante de longeron de convoyeur selon l'invention, la description ne portant que sur les modifications. Ce longeron reçoit à l'intérieur de sa cavité 80 une rampe 81 de guidage pour deux courroies d'entraînement 82, 83.

Les autres brins des courroies 82, 83 passent sur le dessus du longeron sur une rampe 84. Cette rampe 86 qui reçoit le poids des charges transportées par les courroies 82, 83 comporte deux rainures longitudinales 85, 86 ayant une section adaptée à celle des courroies 82, 83, c'est-à-dire une section trapézoïdale. Les charges, non représentées, placées sur les courroies 82, 83 s'y accrochent par adhérence.

Il est clair que le nombre de courroies utilisé de chaque côté du convoyeur dépend des charges transportées.

Selon le mode de réalisation de la figure 13, la rampe de guidage 81 servant aux brins de retour des courroies 82, 83, n'est soumise qu'à une charge très faible (poids des brins de retour) et les courroies s'appuient par leur dessus (en position renversée). Cette rampe 81 comporte deux bords de guidage 87, 88.

La rampe de guidage 84 qui reçoit le poids des charges transférées par les courroies 82, 83, est réalisée de manière à résister à cette charge et à pouvoir guider efficacement les courroies ; pour cette raison, afin que les courroies ne puissent basculer sous l'effet des charges, la rampe 84 comporte deux rainures de section trapézoïdale 85, 86 comme cela a déjà été indiqué.

Enfin, les poulies de renvoi et d'entraînement ont des sections correspondant à celles des courroies.

Il est à remarquer que la figure 13 ne montre que le longeron d'un côté du convoyeur, l'autre longeron étant non symétrique.

Bien que la description ci-dessus concerne un mode de réalisation à courroie trapézoïdale et à glissière ayant des rainures 85, 86 de section adaptée à cette forme trapézoïdale, c'est-à-dire également trapézoïdale, d'autres formes de courroie et de glissière sont envisageables. On peut ainsi prévoir des convoyeurs à courroie ronde ou à courroie plate auquel cas les glissières ont des rainures ou des longements de forme arrondie, par exemple en arc de cercle ou à section rectangulaire.

## Revendications

1. Dispositif de convoyage à bande ou chaîne sans fin avec un brin d'aller recevant les produits à transporter et un brin de retour, ce dispositif étant formé d'éléments porteurs profilés parallèles et successifs de section identique, chaque élément porteur étant formé d'un longeron profilé unique auto-porteur modulaire extrudé en métal léger, chaque longeron (1) ayant une forme générale de C ouvert de section trapézoïdale constituant un logement principal (3) accessible de l'extérieur, le brin de retour du dispositif de convoyage étant entièrement reçu dans le logement principal, quatre rainures de fixation (4) étant réparties à la périphérie de la section en C de chaque longeron pour constituer des logements secondaires en forme de T, lesdites rainures étant formées par des éléments profilés qui entourent ladite section trapézoïdale sans empiéter sur cette section, les ouvertures desdits logements secondaires étant situées dans les faces latérales externes (8) des rainures de fixation (4) dans un plan perpendiculaire au plan de support (P) horizontal, les faces latérales étant alignées deux par deux.

2. Dispositif selon la revendication 1, caractérisé en ce que le logement principal (3) comporte une trappe de visite amovible (7) et les rainures de fixation (4) sont fermées par des joncs de visite clipsables.

3. Dispositif selon la revendication 1, caractérisé en ce que le longeron se poursuit dans sa partie supérieure par un profil porteur (5).

4. Dispositif selon l'une quelconque des revendications 1 à 3, caractérisé par un guide (6) de la charge qui est fixé directement au profil porteur (5).

5. Dispositif selon l'une quelconque des revendications 1 à 4, caractérisé en ce que les longerons sont associés par paires et sont reliés par des entretoises (27) portées par des éclisses (26) montées sur les faces latérales des longerons (23, 24) dans les rainures auxiliaires.

6. Dispositif selon l'une quelconque des revendications 1 à 5, caractérisé en ce que plusieurs longerons (1) peuvent être combinés ou assemblés par vissage ou boulonnage.

7. Dispositif selon l'une quelconque des revendications 1 à 6, caractérisé en ce que les rainures (4) non utilisées et le logement principal (3) peuvent être obstrués pour former un ensemble esthétique propre, protégé de la poussière.

8. Dispositif selon l'une quelconque des revendications 1 à 7, caractérisé par des moyens de protection (5) pour protéger en tous points l'environnement des opérateurs par rapport à la chaîne (11).

9. Dispositif selon l'une quelconque des revendications 1 à 8, caractérisé en ce qu'il comporte à au moins une extrémité du ou des longerons constituant l'ossature du convoyeur, un élément d'extrémité en forme de boîtier (201) réalisé en une seule pièce en métal léger injecté :
   - destiné à être fixé à l'extrémité correspondante d'un longeron,
   - les parois latérales (202, 203) du boîtier (201) comportent une double coulisse longitudinale (206, 207, 208) homologue, recevant, de manière coulissante, l'axe (225) du pignon (ou de la poulie) de renvoi (224) de la chaîne (228) (ou de la courroie (229)) du convoyeur,
   - deux ressorts à air (226) dont une extrémité (226B) est reliée à la paroi (202, 203) correspondante du boîtier (201) et l'autre (226A) à l'axe du pignon (225) ou de la poulie de renvoi (224) de manière à exercer sur ce pignon ou cette poulie une poussée constante dans le sens de la tension de la chaîne (228) ou de la courroie (229).

10. Dispositif selon l'une quelconque des revendications 1 à 8, caractérisé en ce qu'il comporte un élément d'extrémité en forme de boîtier réalisé en une seule pièce en métal léger injecté,
    - comportant dans ses parois latérales (232, 233) un passage (245, 246) pour l'axe moteur de la chaîne,
    - des moyens de fixation latérale (241, 242, 243, 244) du boîtier à l'extrémité du longeron,
    - des moyens de fixation (243) du support du tube de protection de l'axe reliant les deux longerons homologues et du boîtier du moto-réducteur d'entraînement de l'axe.

11. Dispositif selon l'une quelconque des revendications 9 et 10, caractérisé en ce que les moyens de fixation du boîtier d'extrémité sur le longeron, sont constitués par des cornières (219) dont l'une (219B) des ailes est fixée sur des rainures auxiliaires du longeron principal, sur la face externe du longeron et sur la face interne de celui-ci et l'autre aile (219A) de chacune des deux cornières (219) est reliée à des pattes (215, 216, 217, 218) de la facec avant (205) du boîtier (201).

12. Dispositif selon l'une quelconque des revendications 1 à 11, caractérisé en ce qu'il comporte un support d'accessoire (70-76) formé d'une semelle (70) destinée à être fixée à l'une des rainures auxiliaires des longerons et portant une lyre (72) à deux branches (73, 74) recevant un accessoire, l'ensemble étant serré par une vis.

13. Dispositif selon l'une quelconque des revendications 1 à 12, caractérisé par un longeron complémentaire (50) formant un support, ayant une surface d'appui (51) destinée à s'appuyer sur la surface supérieure (70) du longeron principal (101) et descendant en-dessous de la surface supérieure (70) du longeron principal (101) jusqu'au niveau de l'une des rainures auxiliaires (104) supérieures et portant des moyens de fixation (52) de ce longeron auxiliaire (50) dans la rainure auxiliaire (104) correspondante, ce longeron formant, dans sa partie supérieure, un retour (59) pour recevoir un guide latéral (60) et dans sa partie intermédiaire, des perçages (53) pour recevoir l'extrémité des axes des rouleaux (54) pour former un convoyeur à rouleaux.

14. Dispositif selon la revendication 13, caractérisé en ce que le longeron auxiliaire (50) comporte une rainure auxiliaire (62).

15. Dispositif selon la revendication 13, caractérisé en ce que le guide latéral (60) comporte un cache (61) ou peigne avec des découpes pour venir sur et dans l'intervalle des rouleaux (54).

16. Dispositif selon l'une quelconque des revendications 1 à 15, caractérisé en ce que, de chaque côté du convoyeur, le ou les longerons comportent des rampes de guidage (81, 84), l'une a l'intérieur (80) du longeron, l'autre sur le dessus, pour assurer le guidage de courroies de transport (82, 83).

17. Dispositif selon la revendication 16, caractérisé en ce que la rampe (81) de guidage des brins de retour comporte deux bords (87, 88) et la rampe de guidage (84) soutenant et guidant les courroies chargées, comporte deux rainures (85, 86) de section trapézoïdale correspondant à la section des courroies (82, 83).

18. Dispositif selon la revendication 17, caractérisé en ce que les courroies de transport ont une section ronde ou plate et les rainures de guidage ont un ou plusieurs logements de section ronde ou rectangulaire adaptés à la section des courroies.

## Claims

1. Endless belt or chain conveyor device with an outward run to receive the products to be transported and a return run, this device being formed of profiled carrier elements of identical section and arranged parallel and in succession, each carrier element being formed by a single modular self-supporting profiled girder extruded in light metal, each girder (1) having the general shape of an open C with a trapesoidal section constituting a principal housing (3) which is accessible from the exterior, the return run of the conveyor device being entirely received in the principal housing, four fixing grooves (4) being distributed on the periphery of the C section of each girder in order to form secondary T-shaped housings, the said grooves being formed by profiled elements which surround the said trapezoidal section without encroaching upon this section, the openings of the said secondary housings being situated in the external lateral faces (8) of the fixing grooves (4) in a plane perpendicular to the horizontal support plane (P), the lateral faces being aligned in twos.

2. Device as claimed in claim 1, characterised in that the principal housing (3) includes a removable inspection hatch (7) and the fixing grooves (4) are closed by inspection strips which can be clipped in.

3. Device as claimed in claim 1, characterised in that the girder is continued in its upper part by a carrier profile (5).

4. Device as claimed in any one of claims 1 to 3, characterised by a guide (6) for the charge which is fixed directly to the carrier profile (5).

5. Device as claimed in any one of claims 1 to 4, characterised in that the girders are associated in pairs and are connected by struts (27) borne by fishplates (26) mounted on the lateral faces of the girders 923, 24) in the auxiliary grooves.

6.  Device as claimed in any one of claims 1 to 5, characterised in that several girders (1) can be combined or assembled by screwing or bolting.

7.  Device as claimed in any one of claims 1 to 6, characterised in that the grooves (4) which are not used and the principal housing (3) can be blocked so as to form a neat aesthetic assembly which is protected against dust.

8.  Device as claimed in any one of claims 1 to 7, characterised by protection means to protect the surroundings of the operators at all points in relation to the chain (11).

9.  Device as claimed in any one of claims 1 to 8, characterised in that on at least one end of the girder or girders forming the skeleton of the conveyor it includes an end element in the form of a case (201) made in one single piece from injected light metal:
    - intended to be fixed at the corresponding end of a girder,
    - the lateral walls (202, 203) of the case (201) having a homologous double longitudinal slot (206, 207, 208) which receives in a sliding manner the spindle (225) of the return pinion (or pulley) (224) of the chain (228) (or of the belt (229)) of the conveyor,
    - two air springs (226) of which one end (226B) is connected to the corresponding wall (202, 203) of the case (201) and the other (226A) to the spindle (225) of the return pinion of pulley in such a way as to exert on this pinion or this pulley a constant thrust in the direction of tension of the chain (228) or of the belt (229).

10. Device as claimed in any one of claims 1 to 8, characterised in that it includes an end element in the form of a case made in one single piece from injected light metal,
    - including in its lateral walls (232, 233) a passage (245, 246) for the driving spindle of the chain,
    - means (241, 242, 243, 244) for lateral fixing of the case at the end of the girder,
    - fixing means (243) for the support of the protective tube for the spindle linking the two homologous girders and for the case of the motor-reducer for driving the spindle.

11. Device as claimed in any one of claims 9 and 10, characterised in that the means for fixing the end case on the girder are constituted by angle sections (219) of which one (219B) of the flanges is fixed on the auxiliary grooves of the principal girder, on the external face of the girder and on the internal face of the latter and the other flange (219A) of each of the two angle sections (219) is connected to tabs (215, 216, 217, 218) on the front face (205) of the case (201).

12. Device as claimed in any one of claims 1 to 11, characterised in that it includes an accessory support (70-76) formed by a bedplate (70) intended to be fixed to one of the auxiliary grooves of the girders and bearing a stirrup (72) with two branches (73, 74) receiving an accessory, the assembly being locked by a screw.

13. Device as claimed in any one of claims 1 to 12, characterised by a complementary girder (50) forming a support, having a bearing surface (51) intended to rest on the upper surface (70) of the principal girder (101) and going down from the upper surface (70) of the principal girder (10) as far as the level of one of the upper auxiliary grooves (104) and bearing means (52) for fixing this auxiliary girder (50) in the corresponding auxiliary groove (104), this girder forming a return (59) in its upper part to receive a lateral guide (60) and having in its intermediate part holes (53) to receive the end of the roller spindles (54) to form a roller conveyor.

14. Device as claimed in claim 13, characterised in that the auxiliary girder (50) incudes an auxiliary groove (62).

15. Device as claimed in claim 13, characterised in that the lateral guide (60) includes a cover (61) or comb with cut-outs to come onto and into the gaps of the rollers (54).

16. Device as claimed in any one of claims 1 to 15, characterised in that on each side of the conveyor the girder or girders include guide ramps (81, 84), one in the interior (80) of the girder, the other on the top, in order to ensure guiding of the transport belts (82, 83).

17. Device as claimed in claim 16, characterised in that the ramp (81) for guiding the return runs has two rims (87, 88) and the guide ramp (84) supporting and guiding the loaded belts has two grooves (85, 86) of trapezoidal section corresponding to the section of the belts (82, 83).

**18.** Device as claimed in claim 17, characterised in that the transport belts have a round or flat section and the guide grooves have one or several housings of round or rectangular section adapted to the section of the belts.

**Patentansprüche**

**1.** Endlosband- oder -kettenfördervorrichtung mit einem die zu fördernden Erzeugnisse aufnehmenden Fördertrum und einem Rücklauftrum, wobei die Vorrichtung von parallelen und aufeinander folgenden Tragprofilelementen gleichen Querschnitts gebildet ist, jedes Tragelement von einem einzigen aus Leichtmetall extrudierten selbsttragenden modularen Profillängsträger gebildet ist, jeder Langsträger (1) die Grundform eines offenen C von trapezförmigem Querschnitt besitzt, das einen von außen zugänglichen Hauptraum (3) darstellt, das Rücklauftrum der Fördervorrichtung gänzlich im Hauptraum aufgenommen ist, vier Befestigungsnuten (4) auf dem Umfang des C-Querschnitts jedes Längsträgers zur Bildung von Sekundärräumen in T-Form verteilt sind, die Nuten von Profilelementen gebildet sind, die den trapezförmigen Querschnitt umgeben, ohne in diesen Querschnitt einzugreifen, die Öffnungen der Sekundärräume in den äußeren Seitenflächen (8) der Befestigungsnuten (4) in einer zur horizontalen Stützebene (p) senkrechten Ebene gelegen sind und die Seitenflächen paarweise ausgerichtet sind.

**2.** Vorrichtung nach Anspruch 1, dadurch gekennzeichnet, daß der Hauptraum (3) eine abnehmbare Inspektionsklappe (7) aufweist und die Befestigungsnuten (4) durch verrastbare Inspektionsleisten geschlossen sind.

**3.** Vorrichtung nach Anspruch 1, dadurch gekennzeichnet, daß sich der Längsträger in seinem oberen Teil in einem Tragprofil (5) fortsetzt.

**4.** Vorrichtung nach einem der Ansprüche 1 bis 3, gekennzeichnet durch eine Lastführung (6), die direkt am Tragprofil (5) befestigt ist.

**5.** Vorrichtung nach einem der Ansprüche 1 bis 4, dadurch gekennzeichnet, daß die Längsträger paarweise einander zugeordnet und durch Traversen (27) verbunden sind, die von an den Seitenflächen der Längsholme (23,24) in den Hilfsnuten montierten Laschen (26) getragen sind.

**6.** Vorrichtung nach einem der Ansprüche 1 bis 5, dadurch gekennzeichnet, daß mehrere Längsholme (1) durch Verschraubung kombiniert oder zusammengebaut werden können.

**7.** Vorrichtung nach einem der Ansprüche 1 bis 6, dadurch gekennzeichnet, daß die nicht benutzten Nuten (4) und der Hauptraum (3) zur Bildung einer ästhetisch ansprechenden, vor Staub geschützten Einheit geschlossen sein können.

**8.** Vorrichtung nach einem der Ansprüche 1 bis 7, gekennzeichnet durch Schutzmittel (5), um in allen Punkten die Umgebung des Bedienungspersonals in bezug auf die Kette (11) zu schützen.

**9.** Vorrichtung nach einem der Ansprüche 1 bis 8, dadurch gekennzeichnet, daß sie an zumindest einem Ende des oder der das Gerippe des Förderers bildenden Längsträger ein Endelement in Form eines einstückig aus Spritzgußleichtmetall hergestellten Gehäuses (201) aufweist:
- bestimmt zur Befestigung am entsprechenden Ende eines Längsträgers,
- die Seitenwände (202,203) des Gehäuses (201) weisen eine homologe Doppellängsgleitbahn (206,207,208) auf, die gleitbar die Achse (225) des Rades (oder der Scheibe) der Umlenkung (224) der Kette (228) (oder des Bandes (229)) des Förderers aufnimmt,
- zwei Luftfedern (226), deren eines Ende (226B) mit der entsprechenden Wand (202,203) des Gehäuses (201) und deren anderes (226A) mit der Radachse (225) oder der Umlenkscheibe (224) verbunden ist, derart, daß auf dieses Rad oder diese Scheibe ein konstanter Druck im Sinne der Spannung der Kette (228) oder des Bandes (229) ausgeübt wird.

**10.** Vorrichtung nach einem der Ansprüche 1 bis 8, dadurch gekennzeichnet, daß sie ein Endelement in Form eines einstückig aus Spritzgußleichtmetall hergestellten Gehäuses aufweist,
- versehen in seinen Seitenwänden (232,233) mit einem Kanal (245,246) für die Antriebsachse der Kette,
- Mitteln der seitlichen Befestigung (241,242,243,244) des Gehäuses am Ende des Längsträgers und
- Befestigungsmitteln (243) der Abstützung des Schutzrohrs der Achse als Verbindung der beiden homologen Längsträger und des Gehäuses des Getriebemotors für den Antrieb der Achse.

11. Vorrichtung nach einem der Ansprüche 9 und 10, dadurch gekennzeichnet, daß die Mittel der Befestigung des endseitigen Gehäuses am Längsträger von Winkelprofilen (219) gebildet sind, von denen einer (219B) der Schenkel an den Hilfsnuten des Hauptlängsträgers auf der Außenfläche des Längsträgers und auf der Innenfläche desselben befestigt ist und der andere Schenkel (219A) jedes der beiden Winkelprofile (219) mit Laschen (215,216,217,218) der Vorderwand (205) des Gehäuses (201) verbunden ist.

12. Vorrichtung nach einem der Ansprüche 1 bis 11, dadurch gekennzeichnet, daß sie eine von einer Platte (70) gebildete Zubehörabstützung (70-76) aufweist, bestimmt zur Befestigung an einer der Hilfsnuten der Längsträger und einen Dehnungsbogen(72) mit zwei ein Zubehörteil aufnehmenden Armen (73,74) tragend, wobei die Einheit von einer Schraube festgespannt ist.

13. Vorrichtung nach einem der Ansprüche 1 bis 12, gekennzeichnet durch einen eine Abstützung bildenden Ergänzungslängsträger (50) mit einer Stützfläche (51) zur Abstützung auf der Oberfläche (70) des Hauptträgers (101) und abwärtsführend unter die Oberfläche (70) des Hauptlängsträgers (101) bis zur Höhe einer der oberen Hilfsnuten (104) und Befestigungsmittel (52) dieses Hilfslängsträgers (50) in der entsprechenden Hilfsnut (104) tragend, wobei der Längsträger in seinem oberen Teil eine Umlenkung (59) zur Aufnahme einer seitlichen Führung (60) und in seinem mittleren Teil Bohrungen (53) zur Aufnahme der Achsenenden von Rollen (54) zur Bildung eines Rollenförderers ausbildet.

14. Vorrichtung nach Anspruch 13, dadurch gekennzeichnet, daß der Hilfslängsträger (50) eine Hilfsnut (62) aufweist.

15. Vorrichtung nach Anspruch 13, dadurch gekennzeichnet, daß die seitliche Führung (60) eine Verkleidung (61) oder einen Kamm mit Ausschnitten aufweist, um in den Zwischenraum der Rollen (54) zu gelangen.

16. Vorrichtung nach einem der Ansprüche 1 bis 15, dadurch gekennzeichnet, daß auf jeder Seite des Förderers der oder die Längsträger Führungsbahnen (81,84), die eine im Inneren (80) des Längsträgers, die andere auf der Oberseite, zur Gewährleistung der Führung von Förderbändern (82,83) aufweisen.

17. Vorrichtung nach Anspruch 16, dadurch gekennzeichnet, daß die Führungsbahn (81) der Rücklauftrume zwei Ränder (87,88) und die die beladenen Bänder abstützende und führende Führungsbahn (84) zwei Nuten (85,86) von trapezförmigem Querschnitt entsprechend dem Querschnitt der Bänder (82,83) aufweist.

18. Vorrichtung nach Anspruch 17, dadurch gekennzeichnet, daß die Förderbänder einen runden oder flachen Querschnitt und die Führungsnuten einen oder mehrere Aufnahmeräume mit rundem oder rechteckigem Querschnitt aufweisen, der an den Querschnitt der Bänder angepaßt ist.

Fig.1

Fig. 2

Fig. 3

14

Fig.4

Fig.5

Fig.6

Fig.7

EP 0 242 276 B1

EP 0 242 276 B1

Fig. 9

Fig. 8

18

Fig.10

Fig.11

Fig.12

Fig.13